(19) Europäisches Patentamt
European Patent Office
Office européen des brevets

(11) **EP 2 053 820 A1**

(12) **EUROPEAN PATENT APPLICATION**

(43) Date of publication:
**29.04.2009 Bulletin 2009/18**

(51) Int Cl.:
***H04L 29/06*** *(2006.01)*

(21) Application number: **07020644.6**

(22) Date of filing: **22.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventors:
• **Kröselberg, Dirk**
**80469 München (DE)**
• **Miettinen, Kari**
**01820 Klaukkala (FI)**

(74) Representative: **Bruglachner, Thomas E.**
**Nokia Siemens Network GmbH & Co. KG**
**Patentabteilung**
**Postfach 80 17 60**
**81541 München (DE)**

(54) **Method and device for data processing and communication system comprising such device**

(57) A method for data processing in a network is provided comprising the following steps of (a) a first network element provides session information to a second network element; (b) the second network element determines a first Id-value processing an identity information that is based on the session information via a first one-way function; and (c) the second network element provides the Id-value to the first network element. Further, a device and a communication system are provided herewith.

FIG 2

**Description**

The invention relates to a method and to a device for data processing and to a communication system comprising such a device.

For details on WiMAX networks reference is made to [1].

In WiMAX networks, it is possible to hide the real subscription and hence the subscriber's identity from the local access network and/or from the visited network (in case of roaming). This means that a Access Service Network (ASN), or a visited Connectivity Service Network (vCSN) are not able to identify the subscriber using any service offered by their network. Only the home CSN (hCSN) of a subscriber is able to reveal the subscriber's identity. The same applies to any network element in the hCSN that is not the AAA server and cannot resolve the subscriber identity through the AAA server.

WiMAX subscribers or devices can use a pseudonym instead of their real subscription identities as the username part of the Network Access Identifier (NAI, see [2]) provided to the network during network entry and during the authorization procedure uses an Extensible Authentication Protocol (EAP, see [3]).

The real subscription identity is communicated only from the subscriber's device to the hCSN, EAP allows for hiding this identity in a way that any traversed network in-between, especially ASN or any vCSN cannot see the real identity of the subscriber.

Legal interception may be required in the local access network or the visited network in particular with regard to a nationally or internationally roaming subscriber. However, as no real subscription identity is made available in the ASN or vCSN, any Legal Enforcement Agency (LEA) is unable to map any intercepted information to a specific subscriber, i.e. a real or legal person.

The **problem** to be solved is to overcome the disadvantages as described and to provide an approach that allows legal interception in an efficient way.

This problem is solved according to the features of the independent claims. Further embodiments result from the depending claims.

In order to overcome this problem, a method for data processing in a network is provided comprising the following steps:

    (a) a first network element provides session information to a second network element;
    (b) the second network element determines a first Id-value processing an identity information that is determined based on the session information, via a first one-way function;
    (c) the second network element provides the Id-value to the first network element.

It is to be noted that said session information provided by the first network element may in particular be session related and/or connection related and/or call related information. Said session information may further be or be associated with information that is required prior to an actual session being (or to be) established and/or required for an establishment of a session. In addition, said session information may be related to information regarding the preparation (process) of a session. Said session related information may in particular be utilized identifying a subscriber and/or terminal. In addition, such session information may relate to an initial registration of a particular subscriber, e.g., a mobile subscriber. Optionally, the session information is or is associated with a trigger for the second network element to determine said first Id-value.

Hence, the second network element is able to map the session information to identity information thereby identifying the actual subscriber. This identity information is converted into said first Id-value, e.g., a first hash value that is conveyed to the first network element.

Advantageously, said information of the first Id-value can be utilized for data interception purposes.

Preferably, the first network element stores the first Id-value with an associated session profile.

It is to be noted that intercepted data may refer to user data as well as to control data. Basically, various kinds of data traffic may be subject to interception. In particular, signaling information can be subject to interception.

Identity information may comprise in particular data that is associated with the real identity of the subscriber, i.e. the identity of the real or legal person connected with this subscriber.

For legal interception purposes, in particular in WiMAX networks, it may be useful providing access to both control and data traffic generated by and for a subscriber that uses network and application services (e.g., VoIP or any form of multimedia) offered by the (WiMAX) network.

Interception is typically done in network entities being in charge of controlling the subscriber related traffic and/or signaling information. For a WiMAX network, in particular the Access Service Network Gateway (ASN GW) in the ASN, the Home Agent (HA), a network element being part of an IP multimedia subsystem (IMS) like a P-CSCF or S-CSCF, an application server, or a router in the Connectivity Service Network (CSN), and an Authentication, Authorization and Accounting (AAA) server are expected to be subject to regulatory requirements in the area of legal interception, i.e. these entities may have to provide appropriate interfaces and functionalities to provide information as requested by an LEA.

Also, the AAA server storing subscriber's subscription data may be affected as well as potential application servers providing services like voice over IP (VoIP) or services regarding a location.

A significant information that is subject to such an interception is an identity and/or additional information allowing to map intercepted data to the subscription used by the device being intercepted. Hence, the subscriber's identity referring to a real or legal person can be determined.

According to an embodiment, the method comprises the following step that may in particular be processed prior to step (b), prior to step (c) or after step (c):

(d1) a third network element provides a second Id-value to the first network element.

The third network element being a or initiated by an LEA conveys the second Id-value to the first network element.

According to a further embodiment, the second Id-value is determined by processing identity information via the first one-way function.

Hence, the third network element utilizes the first one-way function, in particular a hash-function, to determine the second Id-value based on an identity information available at the third network element.

According to another embodiment, the method further comprises the step:

(d2) the first network element compares the first Id-value and the second Id-value and in case they match forwards (interception) data to the third network element.

Hence, the first Id-value stored at the first network element is compared to the second Id-value obtained from the third network element. If they match, the underlying subscriber is determined to be subject to interception and the first network element forwards data to be intercepted (e.g., user data, controlling data, signaling data) towards the third network element or any other network element being in charge of receiving the respective intercepted data.

Alternatively or in addition, the first network element may initiate forwarding of interception data towards the LEA.

The problem is also solved by a method for data processing in a network comprising the following steps:

(a) a first network element provides session information to a second network element;
(b) the second network element determines a first Id-value by processing the identity information that is based on the session information via a first one-way function and the output thereof by a second one-way function, wherein said second one-way function considers a parameter;
(c) the second network element provides the Id-value to the first network element.

The session information shall in particular be understood according to the examples and/or as explained herein.

Hence, the second network element applies the first one-way function (e.g., a first hash function) to the identity information based on the session information provided by the first network element. The output of this first one-way function is input to the second one-way function (e.g., a second hash function) thereby producing the first Id-value. The output of the second one-way function is also depending on an input parameter.

As an option, the first one-way function and the second one-way function may process the same algorithm, wherein the second one-way function has in addition a parameter that is input to said one-way function.

It is a further option that several such one-way functions can be utilized in a similar (e.g., cascaded) manner. E.g., three or more different one-way function and/or different parameters can be used as well.

According to an embodiment, said parameter is valid for a predetermined period of time. It is a further alternative that said parameter comprises at least one of the following:

- a timestamp;
- a session-related parameter;
- a temporary parameter;
- a time-based parameter;
- a string value;
- an AAA-session ID, in particular as used in WiMAX;
- a pseudonym NAI.

According to a further embodiment, the method comprises the following step that may in particular be processed prior to step (b), prior to step (c) or after step (c):

(d1) a third network element provides a second Id-value to the first network element.

According to another embodiment the second Id-value is determined by processing identity information via the first one-way function.

According to yet another embodiment, the method comprises the steps:

(d2) the first network element determines a third Id-value by processing the second Id-value via the second one-way function;

(d3) the first network element compares the first Id-value and the third Id-value and in case they match forwards (interception) data to the third network element.

In particular, the first network element computes the third Id-value by utilization of the second one-way function and the parameter, which are both accessible to the first network element.

Hence, the first Id-value stored at the first network element is compared to the third Id-value as calculated. If they match, the underlying subscriber is determined to be subject to interception and the first network element forwards data to be intercepted (e.g., user data, controlling data, signaling data) toward the third network element or any other network element being in charge of receiving the respective intercepted data.

Alternatively or in addition, the first network element may initiate forwarding of interception data towards the LEA.

In a further embodiment, the first one-way function and/or the second one-way function each is a hash-function or a function pursuant to a hash-algorithm.

In a next embodiment, the Id-value is a hash-value.

The approach presented may in particular apply to network architectures using an Extensible Authentication Protocol (EAP) that may be utilized to describe an access network, a visited network and/or a home network in general.

In an EAP approach, the identity can - depending on the capabilities of an actual EAP method - be hidden and only be revealed by the end device (EAP supplicant) and the backend AAA server, but not by an intermediate network element.

It is also an embodiment that the first network element comprises a functionality of at least one of the following components:

- an Access Service Network Gateway;
- a Home Agent or a router;
- a P-CSCF or S-CSCF of an IMS system;
- an application server;
- an AAA server located within the visited network.

Furthermore, the first network element may be realized in or as one of the previous components.

Pursuant to another embodiment, the second network element comprises a functionality of at least one of the following components:

- an AAA server;
- a computer system performing AAA services.

Furthermore, the second network element may be realized in or as one of the previous components.

According to an embodiment, the network comprises a mobile station, a visited network and a home network.

It is also an embodiment that

- the first network element is associated with and/or located in the local access network, in the visited network or in the home network; and
- the second network element is associated with and/or located in the home network.

Pursuant to another embodiment, said session information comprises at least one of the following:

- a session identifier;
- a Network Access Identifier;
- an AAA session identifier;
- a Chargeable User Identity;
- a Call-ID or IMPU.

The session information may preferably comprise or be a piece of information connected to a particular session of at least one subscriber.

According to an embodiment, the identity information comprises at least one of the following:

- an identity of at least one subscriber;
- identities of a group of subscribers;
- an identity based on a pseudonym and/or an identifier used in the network, in particular based on a MAC address;
- a status of a subscriber, in particular a status of connection within the network.

The identity of the subscriber may in particular comprise information upon the real subscriber, i.e. the real or legal person behind the subscription. The status of a subscriber may reveal whether such subscriber is (or was) active in the network. In addition, the status may show a position of the subscriber within the respective network, in particular over a given time period. Based on such information, tracking of a subscriber's position within the network (over a predetermined period of time) is possible, in particular with the benefit of hindsight.

According to another embodiment, the third network element is a legal interception (LI) device and/or a Legal Enforcement Agency (LEA).

According to another embodiment, the third network element is a legal interception (LI) device.

Such legal interception (LI) device may be located within the range of a visited network or within a home network. The LI device may further be at least partially implemented within the first or the second network element.

In yet another embodiment, the third network element forwards data to a Legal Enforcement Agency (LEA).

The problem stated above is also solved by a device for comprising a processor unit that is equipped and/or arranged such that the method as described herein is executable on said processor unit.

According to an embodiment, the device is a communication device, in particular one of the following:

- a legal interception device;
- an Access Service Network;
- a Gateway;
- a Home Agent
- an application server;
- an AAA server;
- a visited AAA server.

The problem stated above is also solved by a device for data processing comprising:

- means for storing Id-values;
- means for comparing Id-values.

As an embodiment, said device further comprises:

- means for computing an output of a one-way function, in particular of a hash function;
- means for data interception.

The problem stated supra is further solved by a communication system comprising the device as described herein.

Embodiments of the invention are shown and illustrated in the following figures:

Fig.1    shows a WiMAX Architecture comprising a (Mobile) Subscriber Station, a visited network and a home net-work;

Fig.2    shows a message flow diagram depicting WiMAX legal interception based on Id-values that are provided as hash values;

Fig.3    shows a message flow diagram depicting WiMAX legal interception based on Id-values that are provided as hash values via several hash functions.

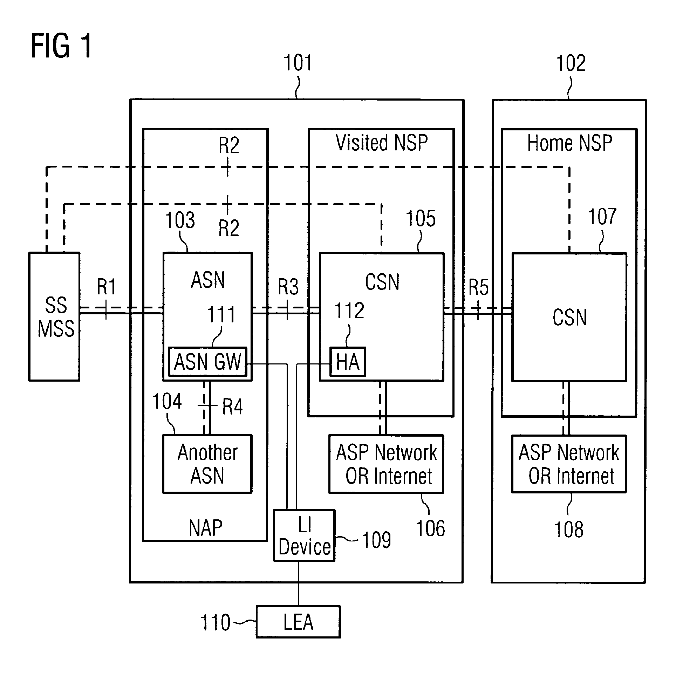

**Fig.1** shows a WiMAX Architecture comprising a Subscriber Station SS (also referred to as Mobile SS, MSS), a visited network 101 and a home network 102.

The visited network 101 comprises a Network Access Provider NAP with an Access Service Network ASN 103 and another ASN 104, wherein the ASN 103 and the ASN 104 are connected via an R4 interface. The visited network 101 further comprises a visited Network Service Provider NSP comprising a Connectivity Service Network CSN 105 that is connected to an ASP network or the Internet 106.

The ASN 103 and the CSN 105 are connected via an R3 interface. The Subscriber Station SS is connected to the ASN 103 via an R1 interface. The Subscriber Station SS is further connected to the CSN 105 via an R2 interface.

The home network 102 comprises a home Network Service Provider NSP with a Connectivity Service Network 107 that is connected to a ASP Network or the Internet 108. The CSN 107 is connected to the CSN 105 via an R5 interface and to the Subscriber Station SS via an R2 interface.

A LI Device 109 may be located within the visited network 101 and it may be connected to a Legal Enforcement Agency 110. As an alternative, the LI Device 109 may be located within the home network 102.

In an embodiment, the LI Device 109 is connected to an ASN GW 111 within the ASN 103 and to a Home Agent HA 112 within the CSN 105. It is to be noted that the ASN GW 111 and/or the HA 112 may be functional components implemented in the respective blocks 103, 105. Alternatively, the ASN GW and/or HA may comprise such LI device functionality 109.

It is to be noted that the HA 112 can be located within the visited network or within the home CSN.

The approach described herein in particular allows a correlation of identities in the network such that a legal intercept facility (e.g., an LI device) or an LEA is able to map a pseudonym or any other kind of temporary identity to a subscriber's identification or any other data connected to an actual or legal person, or vice versa.

The mechanism allows maintaining an identity hiding feature as specified by the WiMAX Forum.

For intercepting information in a WiMAX access or visited network (ASN or CSN) and for correlating intercepted information to subscriber identities, in particular the following approaches can be utilized.

The LI device or the LEA (hereinafter in particular referred to as "LI infrastructure") receives intercepted information (control/signaling information and/or data) from the network elements of the access network and/or of the visited network (e.g., ASN-GW, Mobile-IP HA, P-CSCF, S-CSCF, AAA-Server in the visited network).

Further, the LI infrastructure may independently also receive information from the home network of the subscription.

Such information from both networks may include specific session-related information (e.g., session-related identifiers) that allow a mapping of intercepted data.

Preferably, LI architectures include an LI device (a mediation device and/or an aggregation device) to trigger an interception as requested by an LEA and to aggregate intercepted information as well as to send such information (or a portion thereof) to the LEA that asked for interception. The information forwarded to the LEA by the LI device may in particular be (partially) processed, e.g., filtered and/or compressed by the LI device to meet the request of the LEA. Of course, data may be transparently forwarded to the LEA without any processing by the LI device.

The LEA may further correlate information received from different sources and hence be able to reveal an identity of a subscription, i.e., the real or legal person.

Such correlation can be conducted (to a full or partial extent) by the LI device.

The approach suggested advantageously provides an extension to the existing AAA interface in a WiMAX environment that connects the ASN with the hCSN AAA server via the R3 interface, or the vCSN with the hCSN via the R5 interface.

In order to achieve the desired result, at least one "one-way function" is utilized. This one-way function can be realized as a hash function and/or as a hash algorithm in order to produce hash values instead of a real subscriber identities (NAI). Such hash function may be processed in the home operator's AAA server and/or within the LI infrastructure or the LI equipment.

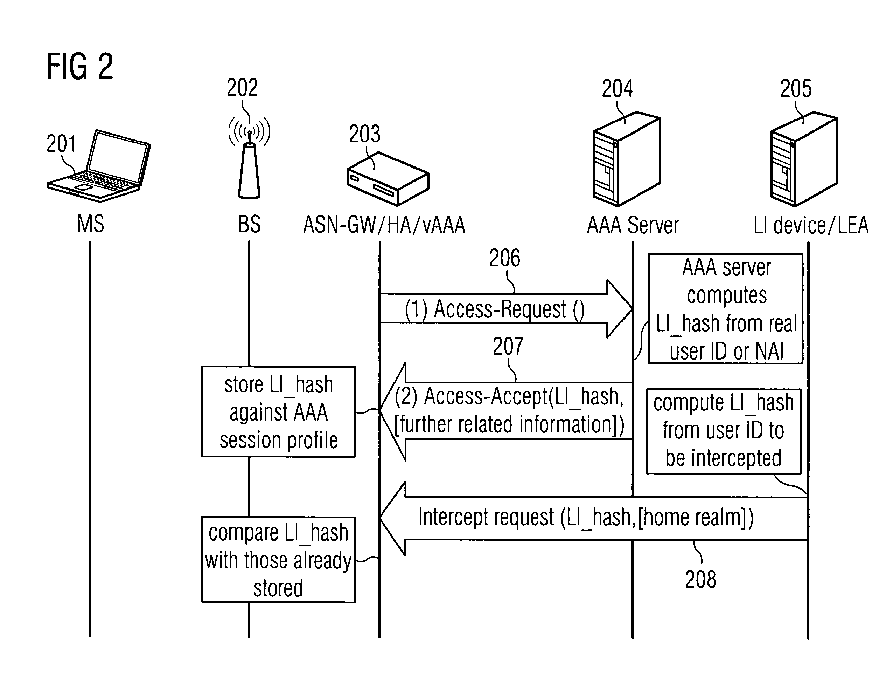

Fig.2 shows a message flow diagram depicting WiMAX legal interception based on Id-values that are provided as hash values.

Fig.2 comprises a mobile station MS 201, a base station BS 202 a first network element 203 (that can be, e.g., an ASN GW, a HA, a vAAA or the like), a second network element 204 (e.g., an AAA server), a third network element 205 (e.g., an LI device and/or an LEA).

Hash values (also referred to as "LI_hash") may then be passed to the local or visited network by the AAA server, instead of sending the real NAI.

Advantageously, the AAA server 204 performs the LI_hash calculation for each network access request 206 received and sends the LI_hash value computed together with existing AAA messages 207 (e.g., Access-Accept-message and/or Access-Reject-message) to the access network ASN-GW 203. Preferably, the ASN-GW 203 stores for every registered subscriber or AAA session the received LI_hash received in its local database.

The legal enforcement infrastructure 205 performs the LI_hash calculation, preferably independent from the AAA server, for a subscriber that needs to be intercepted. It is to be noted that algorithms (i.e., the one-way function, e.g., hash-function) as well as input parameters like the real user ID (also referred to as "identity information") are also known to the LEA or LI equipment 205 that is in charge of providing information to the local or visited network about which session to intercept.

The ASN or v-CSN 203 that is in charge of performing the actual interception may receive an LI_hash value for any registration of a subscriber or mobile station 201 from the AAA server 204. It will also receive an LI_hash value from the LI infrastructure 205 requesting interception. The ASN 203 then searches its database and AAA session cache for a match between any such LI_hash values. If there is a match, the target to be intercepted is identified and interception can be initiated without the ASN or vCSN 203 knowing the actual identity of the subscriber.

The approach, however, may allow tracing the LI_hash values across several registrations over time, or across several access networks during handover. A further mechanism is suggested herein in order to prevent such traceability of the subscriber based on the LI_hash value provided to the ASN or vCSN.

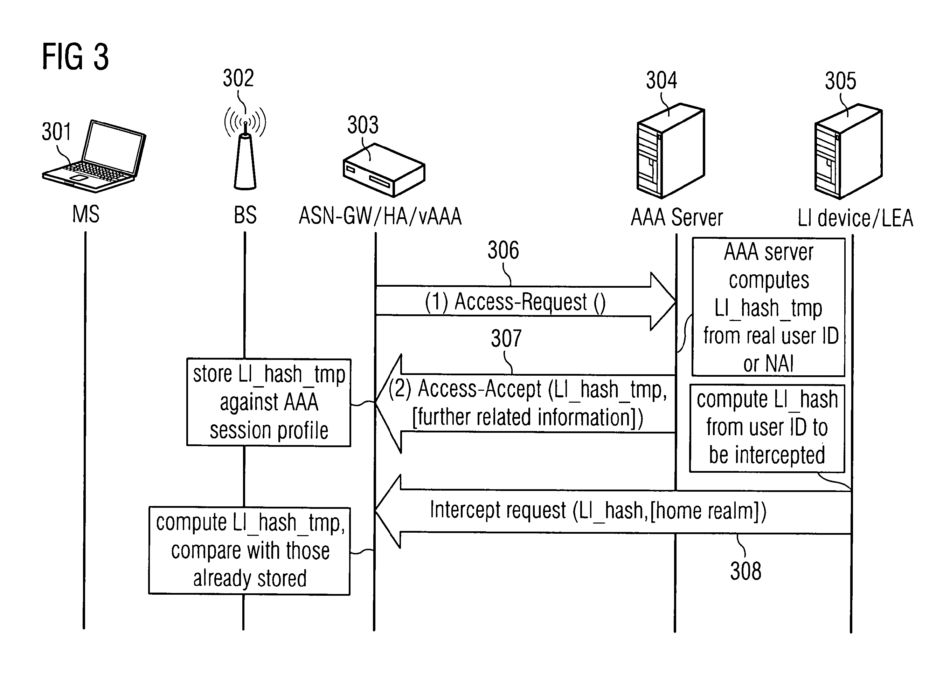

**Fig.3** shows a message flow diagram depicting WiMAX legal interception based on Id-values that are provided as hash values via several hash functions. Fig.3 comprises a mobile station MS 301, a base station BS 302 a first network element 303 (that can be, e.g., an ASN GW, a HA, a P-CSCF, a vAAA or the like), a second network element 304 (e.g., an AAA server) and a third network element 305 (e.g., an LI device and/or an LEA).

In an additional step, the AAA server 303 applies a second hash calculation after having generated the LI_ hash value. This can be achieved by utilizing a further hash function, wherein the LI_hash value and an additional session-related parameter are input to said hash function computing a LI_hash_tmp value as a result.

It is to be noted that said further hash function may utilize the algorithm of the previous (first) hash function. The only difference is that said parameter is also to be considered by this further hash function.

The parameter may in particular be a session-related and/or temporary and/or time-based parameter. Optionally, also another fixed string value can be utilized as such parameter. This parameter can be, e.g., an AAA-session ID used in WiMAX, or the pseudonym NAI the subscriber is currently using, or a time-stamp.

The result of the further hash function is referred to as LI_hash_tmp. Instead of sending the LI_hash value, the AAA server 304 sends the LI_hash_tmp value back in the AAA message 307 (Access-Accept-message or Access-Reject-message) for registration purposes.

The LI infrastructure 305, upon receiving an interception request, calculates the LI_hash value bases on the previous has function and sends via an Intercept request message 308 comprising this LI_hash value (it may not be aware of the temporary session-related information) to the ASN-GW 303.

The ASN-GW 303 is aware of said temporary information (e.g., the AAA-session ID) that is required as parameter for the further hash function. Hence, the ASN-GW 303 performs the second hash calculation using the temporary information and the LI_hash received from the LI infrastructure 305 thereby generating a LI_hash_tmp value.

Next, the ASN-GW 303 compares the received LI_hash_tmp values as set forth above and if there is a match, the ASN-GW 303 will initiate interception.

The advantage of the additional step according to Fig.3 is in particular that the ASN or vCSN 303, for a normal registration without interception (the vast majority of ongoing sessions), gets a different LI_hash_tmp value for every registration. Hence, tracing of the same subscriber is rather impossible for the ASN or vCSN 303.

Implementation and Further Advantages:

The approach described provides a solution for all roaming situations, even if the home network and local/ visited networks are located in different locations/countries and are subject to different jurisdictions.

It also preserves the identity hiding property of the WiMAX network or of EAP authentication methods being used.

The mechanism of sending the LI_hash value to the ASN or vCSN can be realized by using the existing AAA interface in WiMAX. For the current Release 1.1.0 of the specifications, such realization may be provided based on a RADIUS protocol [4].

The mechanism of sending the LI_hash from the LI infrastructure (LEA, LI Gateway, etc.) to the ASN or vCSN operator and to the actual network elements performing interception, may at least partially depend on country-specific or proprietary interfaces. Preferably, a protocol field can be used that is able to carry an octet string value of at least 128bit length.

The LI infrastructure may also include the information identifying the home network of the subscriber to be intercepted (e.g., the realm part from the NAI holding the real subscriber identity).

Still, this may not allow the ASN or vCSN to identify the subscriber that is subject to an interception, but it may allow the receiving entity (e:g., the ASN-GW) to limit the process of matching LI_hash values with the current session database to those entries matching the denounced home network or realm. Such limitation may be advantageous to minimize the performance impact, especially in roaming scenarios.

The LI_hash value may be generated as follows:

$$\text{LI\_hash} = \text{SHA-1}(\text{"Protected-ID"} \mid \text{user-ID}),$$

wherein

SHA-1        is used as cryptographic hash function (this can be any other suitable one-way or hash function, e.g., SHA-256);

"Protected-ID"    is a fixed string (can be any kind of string); and

user-ID       is the real identity of the subscription (also referred to as identity information) that is also the identity the interception action is taken against (i.e., the LEA using this to identify the interception target).

The entity that is requested to generate legal intercept information (e.g., ASN-GW, AAA proxy/server in a vCSN, HA or application servers), may send a RADIUS access request message 206, 306 to the AAA server during network access authentication.

The AAA server adds the LI_hash value as a RADIUS attribute to the "Access-Accept-message" 207, 307 (or Access Reject in case of an unsuccessful registration attempt).

As an alternative, any suitable RADIUS attribute being able to carry an octet string value, or a newly defined attribute, e.g., WiMAX-specific VSA (vendor-specific attribute) may be utilized for such purpose.

The AAA server may as an additional alternative decide whether to add LI_hash values for its subscribers based on a local policy, e.g., derived from the legal situation in the country where the operator is residing, or based on the information about the ASN or vCSN that is requesting network access authentication.

The receiving entity (e.g. ASN-GW, HA, vAAA or application server) stores all such received LI_hash values against the corresponding AAA session context, such that this information is available if a request for interception is received from the LI infrastructure or the LEA.

This approach efficiently allows hiding of information regarding which subscribers are actually subject to interception from the hCSN, as the hCSN may be a different business entity, or it may be located in a different country with different legal regulations. The LI_hash value may optionally be sent for all subscribers and mobile stations, depending on the home network's policy and legislation.

For the additional step as described above (see Fig.3), i.e., the AAA server using the LI_hash_tmp value instead of the LI_hash value, the hash value may be calculated as follows:

$$LI\_hash\_tmp = SHA\text{-}1(\text{"Protected-ID-tmp"} \mid LI\_hash \mid \mid AAA\text{-session ID}).$$

Another mechanism for generating a temporary parameter is time-based. Hence, the AAA-server can use a certain time-related value that may change at a predetermined or fixed rate (e.g., every day or every hour).

If the ASN-GW receives a LI_hash value from the LI device or the LEA, it determines the relevant time information (either based on the actual time in case of a new registration, or based on the original time of registration for existing registrations) as input to the LI_hash_tmp calculation. Advantageously, the LI_hash_tmp values can be generated in advance, e.g., during some idle time for the specific time period, in particular to speed up the matching process for a new incoming registration.

It is to be noted that the message flow shown in Fig.2 and Fig.3 may vary, i.e., the LI_hash value can be received from the LI device/LEA 205, 305 prior to the LI_hash value or LI_hash_tmp value received from the AAA server 204, 304.

Thus, the receiving entity stores the values received and checks for every new registration whether the LI_hash received in the Access_Accept message matches a stored LI_hash (accordingly for LI_hash_tmp as per Fig.3).

The LI device/LEA 205, 305 represents LI equipment either located at an LEA premises, or within the operator's network.

It is another option that the third network element (205, 305) only comprises the LI device, whereas the LEA is separated from the LI device. In such a scenario, the LEA may initiate an intercept request that may be conveyed to the LI device and then forwarded by the LI device. The LEA may also calculate the LI_hash value based on identity information of the subscriber that is subject to interception.

**References:**

[1] WiMAX-Forum, Technical Documents and Specifications: http://www.wimaxforum.org/technology/documents

[2] RFC 4284:
http://www.rfc-archive.org/getrfc.php?rfc=4284

[3] RFC 3748:
http://www.rfc-archive.org/getrfc.php?rfc=3748

[4] RFC 2865:
http://www.rfc-archive.org/getrfc.php?rfc=2865

**Abbreviations:**

| | |
|---|---|
| AAA | Authentication, Authorization and Accounting |
| ASN | Access Service Network |
| ASP | Application Service Provider |
| CoA | Care of Address |
| CSN | Connectivity Service Network |
| CUI | Chargeable User Identity |
| EAP | Extensible Authentication Protocol |
| EAP-TLS | EAP-Transport Layer Security |
| EAP-TTLS | EAP-Tunneled Transport Layer Security |
| GW | Gateway |
| HA | Home Agent |
| hCSN | home CSN |
| IMPU | IP Multimedia Public Identity |
| IMS | IP Multimedia Subsystem |
| IP | Internet Protocol |
| LEA | Legal Enforcement Agency |
| LI | Legal Interception |
| MIP | Mobile Internet Protocol |
| MSS | Mobile Subscriber Station |
| NAI | Network Access Identifier |
| NAP | Network Access Provider |
| NSP | Network Service Provider |
| PKI | Public Key Infrastructure |
| P-CSCF | Proxy Call Session Control Function |
| QoS | Quality of Service |
| RADIUS | Remote Access Dial In User Service |
| S-CSCF | Serving Call Session Control Function |
| SS | Subscriber Station |
| vCSN | visited CSN |
| VoIP | Voice over IP |
| VSA | Vendor Specific Attribute |
| WiMAX | Worldwide Interoperability for Microwave Access |
| WLAN | Wireless Area Network |

**Claims**

1. A method for data processing in a network comprising the following steps:

   (a) a first network element provides session information to a second network element;
   (b) the second network element determines a first Id-value processing an identity information that is based on the session information via a first one-way function;
   (c) the second network element provides the Id-value to the first network element.

2. The method according to any of the preceding claims comprising prior to step (b), prior to step (c) or after step (c) the following step:
   (d1) a third network element provides a second Id-value to the first network element.

3. The method according to claim 2, wherein the second Id-value is determined by processing identity information via the first one-way function.

**4.** The method according to any of claims 2 or 3 comprising the step:
(d2) the first network element compares the first Id-value and the second Id-value and in case they match forwards data to the third network element.

**5.** A method for data processing in a network comprising the following steps:

(a) a first network element provides session information to a second network element;
(b) the second network element determines a first Id-value by processing identity information that is based on the session information via a first one-way function and the output thereof by a second one-way function, wherein said second one-way function considers a parameter;
(c) the second network element provides the Id-value to the first network element.

**6.** The method according to claim 5, wherein said parameter is valid for a predetermined period of time.

**7.** The method according to any of claims 5 or 6, wherein said parameter comprises at least one of the following:

- a timestamp;
- a session-related parameter;
- a temporary parameter;
- a time-based parameter;
- a string value;
- an AAA-session ID, in particular as used in WiMAX;
- a pseudonym NAI.

**8.** The method according to any of claims 5 to 7 comprising prior to step (b), prior to step (c) or after step (c) the following step:
(d1) a third network element provides a second Id-value to the first network element.

**9.** The method according to claim 8, wherein the second Id-value is determined by processing identity information via the first one-way function.

**10.** The method according to any of claims 8 or 9 comprising the steps:
(d2) the first network element determines a third Id-value by processing the second Id-value via the second one-way function;
(d3) the first network element compares the first Id-value and the third Id-value and in case they match forwards data to the third network element.

**11.** The method according to any of claims 5 to 10, wherein the second one-way function is a hash-function.

**12.** The method according to any of the preceding claims, wherein the first one-way function is a hash function.

**13.** The method according to any of the preceding claims, wherein the Id-value is a hash-value.

**14.** The method according to claim 1 comprising a mechanism according to or a functionality according to an Extensible Authentication Protocol.

**15.** The method according to any of the preceding claims, wherein the first network element comprises a functionality of at least one of the following components:

- an Access Service Network Gateway;
- a Home Agent or a router;
- a P-CSCF or S-CSCF of an IMS system;
- an application server;
- an AAA server located within the visited network.

**16.** The method according to any of the preceding claims, wherein the second network element comprises a functionality of at least one of the following components:

- an AAA server;
- a computer system performing AAA services.

17. The method according to any of the preceding claims, wherein the network comprises a mobile station, a visited network and a home network.

18. The method according to claim 17, wherein

- the first network element is associated with and/or located in the local access or visited network or in the home network; and
- the second network element is associated with and/or located in the home network.

19. The method according to any of the preceding claims, wherein the session information comprises at least one of the following:

- a session identifier;
- a Network Access Identifier;
- an AAA session identifier;
- a Chargeable User Identity;
- a Call-ID or IMPU.

20. The method according to any of the preceding claims, wherein the identity information comprises at least one of the following:

- an identity of at least one subscriber;
- identities of a group of subscribers;
- an identity based on a pseudonym and/or an identifier used in the network, in particular based on a MAC address;
- a status of a subscriber, in particular a status of connection within the network.

21. The method according to any of the preceding claims, wherein the third network element is a legal interception device and/or a Legal Enforcement Agency.

22. The method according to any of the preceding claims, wherein the third network element forwards data to a Legal Enforcement Agency.

23. A device comprising a processor unit that is arranged such that the method according of any of the preceding claims is executable on said processor unit.

24. The device according to claim 23, wherein said device is a communication device, in particular:

- a legal interception device;
- an Access Service Network;
- a Gateway;
- a Home Agent
- an application server
- an AAA server;
- a visited AAA server.

25. A device for legal interception comprising:

- means for storing Id-values;
- means for comparing Id-values.

26. The device according to claim 25 further comprising

- means for computing an output of a one-way function, in particular of a hash function;
- means for data interception.

**27.** Communication system comprising the device according to any of claims 23 to 26.

## FIG 1

# FIG 2

**201** MS

**202** BS

**203** ASN-GW/HA/vAAA

**204** AAA Server

**205** LI device/LEA

**206**
(1) Access-Request ()

AAA server computes LI_hash from real user ID or NAI

**207**
(2) Access-Accept(LI_hash, [further related information])

store LI_hash against AAA session profile

compute LI_hash from user ID to be intercepted

Intercept request (LI_hash,[home realm])

compare LI_hash with those already stored

**208**

# FIG 3

- 301 MS
- 302 BS
- 303 ASN-GW/HA/vAAA
- 304 AAA Server
- 305 LI device/LEA

306

(1) Access-Request ()

AAA server computes LI_hash_tmp from real user ID or NAI

store LI_hash_tmp against AAA session profile

307

(2) Access-Accept (LI_hash_tmp, [further related information])

compute LI_hash from user ID to be intercepted

compute LI_hash_tmp, compare with those already stored

Intercept request (LI_hash,[home realm])

308

European Patent
Office

**EUROPEAN SEARCH REPORT**

Application Number

EP 07 02 0644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 463 533 B1 (CALAMERA PABLO M [US] ET AL) 8 October 2002 (2002-10-08) <br> * abstract; claims 3,6,56,57; figures 3-5 * <br> * column 1, lines 7-9 * <br> * column 2, line 66 - column 3, line 17 * <br> * column 3, lines 24-35 * <br> * column 4, line 57 - column 5, line 11 * <br> * column 5, line 66 - column 6, line 20 * <br> * column 6, line 47 - column 8, line 22 * <br> * column 9, line 57 - column 10, line 11 * <br> * column 11, line 4 - column 12, line 13 * <br> ----- | 1,5, 11-13 | INV. H04L29/06 |
| X | WO 2005/032100 A (ERICSSON TELEFON AB L M [SE]; PARDO-BLAZQUEZ AVELINA [ES]; CARRETERO-G) 7 April 2005 (2005-04-07) <br> * abstract; claims 1,3,4,14,17,23,26-28; figures 1,2,3a,3b * <br> * paragraphs [0005], [0006], [0012], [0013], [0031] - [0035], [0046], [0047], [0053] - [0055], [0061], [0065], [0066], [0073] * <br> ----- | 1,5, 11-13 | |
| A | WO 2004/103006 A (NOKIA CORP [FI]; MAEKI TONI [FI]; JOKINEN AARNE [FI]; SAUKKONEN MARKO) 25 November 2004 (2004-11-25) <br> * abstract; claims 1,13,27; figure 2 * <br> * page 2, line 27 - page 3, line 23 * <br> * page 4, line 27 - page 5, line 20 * <br> * page 6, line 15 - page 7, line 8 * <br> * page 8, line 23 - page 10, line 16 * <br> * page 16, line 24 - page 17, line 8 * <br> ----- <br> -/-- | 1-27 | TECHNICAL FIELDS SEARCHED (IPC) <br><br> H04L <br> H04M |

The present search report has been drawn up for all claims

| Place of search | Date of completion of the search | Examiner |
|---|---|---|
| The Hague | 15 April 2008 | Nogueroles Petersen |

EPO FORM 1503 03.82 (P04C01)

**European Patent Office**

**EUROPEAN SEARCH REPORT**

Application Number

EP 07 02 0644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WIMAX FORUM: "WiMAX End-to-End Network Systems Architecture - (Stage 2: Architecture Tenets, Reference Model and Reference Points) - December 15, 2005 DRAFT" <br> 15 December 2005 (2005-12-15), WIMAX FORUM, XX, XX, PAGE(S) 1-242 , XP002442962 <br> * the whole document * <br> ----- | 1-27 | |
| | | | **TECHNICAL FIELDS SEARCHED (IPC)** |

The present search report has been drawn up for all claims

| Place of search | Date of completion of the search | Examiner |
|---|---|---|
| The Hague | 15 April 2008 | Nogueroles Petersen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 02 0644

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2008

| Patent document cited in search report | | Publication date | Patent family member(s) | | Publication date |
|---|---|---|---|---|---|
| US 6463533 | B1 | 08-10-2002 | NONE | | |
| WO 2005032100 | A | 07-04-2005 | AU | 2003265197 A1 | 14-04-2005 |
| | | | CN | 1839608 A | 27-09-2006 |
| | | | EP | 1668859 A1 | 14-06-2006 |
| | | | US | 2007130343 A1 | 07-06-2007 |
| WO 2004103006 | A | 25-11-2004 | NONE | | |